## Europäisches Patentamt
## European Patent Office
## Office européen des brevets

(11) Numéro de publication : **0 348 259 B1**

(12) **FASCICULE DE BREVET EUROPEEN**

(45) Date de publication du fascicule du brevet :
**05.08.92 Bulletin 92/32**

(21) Numéro de dépôt : **89401530.4**

(22) Date de dépôt : **02.06.89**

(51) Int. Cl.⁵ : **G01D 5/22**

(54) **Système pour l'exploitation de signaux provenant de capteurs inductifs linéaires de déplacement.**

(30) Priorité : **17.06.88 FR 8808163**

(43) Date de publication de la demande :
**27.12.89 Bulletin 89/52**

(45) Mention de la délivrance du brevet :
**05.08.92 Bulletin 92/32**

(84) Etats contractants désignés :
**BE CH DE ES GB IT LI NL**

(56) Documents cités :
**EP-A- 0 215 724**
**DE-A- 2 524 975**
**GB-A- 2 068 124**
**PATENT ABSTRACTS OF JAPAN, vol. 6, no. 8
(P-98)[886], 19 janvier 1982, page 166 P 98; &
JP-A-56 137 110 (SHINMEIWA KOGYOK.K.)
26-10-1981**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Duverger, Thierry
4 rue Jean Viollis
F-31300 Toulouse (FR)**
Inventeur : **Rolland, Pierre Charles
17, rue du Pont St. Pierre
F-31300 Toulouse (FR)**

(74) Mandataire : **Bonnetat, Christian
CABINET BONNETAT 23, Rue de Léningrad
F-75008 Paris (FR)**

## Description

La présente invention concerne un procédé et un système pour l'exploitation de signaux provenant de capteurs inductifs linéaires de déplacement.

On sait que les capteurs inductifs linéaires sont très usités de nos jours, notamment en ce qui concerne les capteurs de position angulaire et les capteurs de déplacement rectiligne. Basé sur le principe de variation d'une inductance, ils ont l'avantage d'avoir une très bonne linéarité et une excellente résolution.

On les préfère généralement à d'autres capteurs de type non linéaire ; en effet la relation linéaire qui lie le signal de sortie au déplacement permet une exploitation plus simple du signal. De plus, leur conception en fait des capteurs robustes et les rend aptes à être installés dans des environnements sévères.

La réalisation la plus élémentaire de ce type de capteur comprend un enroulement primaire et un enroulement secondaire. Le déplacement d'un noyau magnétique permet une variation d'inductance, laquelle induit une variation de tension secondaire.

Dans ce type de réalisation, le signal délivré par le secondaire est sensible aux variations de la tension d'alimentation, à la variation du rapport de transformation en fonction de la température et à son imprécision de construction.

Afin de minimiser les grandeurs d'influence, de nouveaux capteurs ont été développés ; ils ont été conçus sur le principe des méthodes différentielles. La réalisation de ces capteurs comprend un enroulement primaire et deux enroulements secondaires en opposition de phase. On peut à ce stade distinguer deux types de capteurs, à savoir les capteurs à 4 fils et les capteurs à 6 fils.

Par le brevet EP-A-0215724, on connaît un capteur à 6 fils, comportant un primaire et au moins deux secondaires qui produisent des signaux de sortie déphasés d'une quantité fixe entre eux. Un additionneur ajoute le signal primaire à chacun des signaux secondaires, ces derniers étant d'amplitude inférieure à celle du primaire, puis ces signaux primaire et secondaires ainsi augmentés sont redressés à double alternance et l'on retranche ensuite l'amplitude primaire à celle de chacun des signaux secondaires augmentés, ce qui redonne l'amplitude initiale de ces signaux secondaires tout en évitant de perdre l'information de phase lors du redressement à double alternance. Le déplacement de l'objet concerné crée alors une variation d'amplitude dans les signaux secondaires, le sens de ce déplacement étant détecté par l'information de phase.

Dans un capteur à 4 fils, deux enroulements secondaires sont reliés en série, de façon à produire des signaux en opposition de phase.

On voit ainsi que, par suite des différences de structure de ces capteurs, les systèmes d'exploitation des signaux qu'ils engendrent sont spécifiques à une structure particulière et ne peuvent être utilisés pour un capteur de structure différente.

La présente invention a pour objet de remédier à cet inconvénient et de prévoir un système d'exploitation des signaux des capteurs inductifs linéaires, adaptable à la structure desdits capteurs.

A cette fin, selon l'invention, le système pour l'exploitation des signaux engendrés par un capteur inductif linéaire de déplacement pourvu d'un primaire, aux bornes duquel est montée une source de tension alternative, et d'un seul ou de deux secondaires identiques indépendants, comportant :

– des premiers moyens d'entrée pour une première tension alternative ;

– des seconds moyens d'entrée pour une seconde tension alternative ;

– des premiers moyens d'addition pour former la somme desdites première et seconde tensions alternatives ;

– des premiers moyens pour le redressement à double alternance de ladite somme ;

– des seconds moyens de redressement à double alternance de ladite première tension alternative ; et

– des moyens de soustraction pour former la différence entre ladite somme redressée et ladite première tension redressée ;

est remarquable en ce qu'il comporte de plus :

– des premiers moyens d'intégration pour donner la valeur continue moyenne de ladite différence ;

– un premier interrupteur disposé entre lesdits seconds moyens de redressement et lesdits moyens de soustraction ;

– une branche de circuit reliée à la sortie desdits premiers moyens de redressement et comportant en série un second interrupteur, des seconds moyens d'addition et des seconds moyens d'intégration pour donner une valeur continue moyenne ;

– une liaison entre la sortie desdits seconds moyens de redressement et lesdits seconds moyens d'addition ; et

– un troisième interrupteur commandant l'amenée de ladite première tension alternative auxdits premiers moyens d'addition.

On peut ainsi, en adaptant la structure électrique de ce système en fonction du capteur, traiter les signaux issus de capteurs à un ou deux secondaires.

De préférence, le système selon l'invention comporte des moyens d'entrée flottante respectivement reliés auxdits premiers et seconds moyens d'entrée.

Il est particulièrement avantageux que l'un desdits moyens d'entrée flottante soit apte, de plus, à former la somme desdites première et seconde tensions alternatives.

Les figures du dessin annexé feront bien comprendre comment l'invention peut être réalisée. Sur ces figures, des références identiques désignent des éléments identiques.

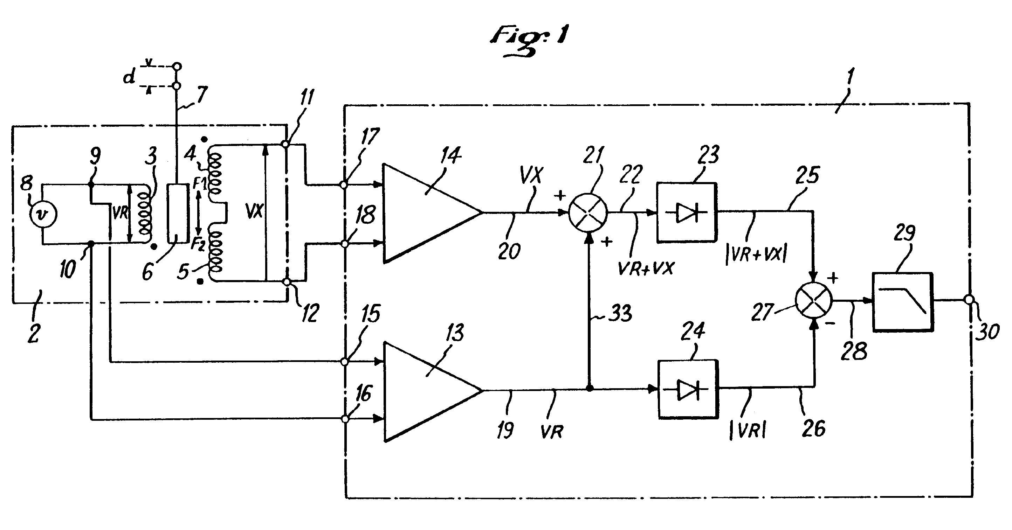

La figure 1 est le schéma synoptique d'un système destiné à un capteur à deux secondaires en série.

Les diagrammes temporels des figures 2a à 2g et 3a à 3g illustrent le fonctionnement du système de la figure 1.

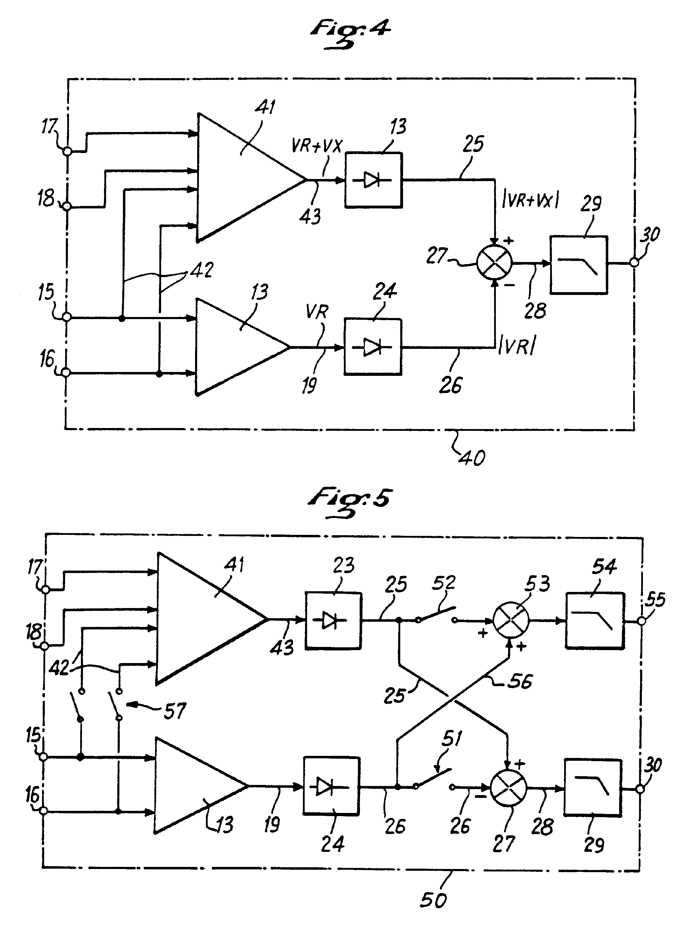

La figure 4 est le schéma synoptique d'une variante de réalisation du système de la figure 1.

Pour les arrangements selon les figures 1 et 4, aucune protection n'est demandée.

La figure 5 est le schéma synoptique d'un système selon l'invention permettant le traitement des signaux provenant des capteurs à un ou deux secondaires (en série ou indépendants).

La figure 6 donne le schéma d'un capteur inductif linéaire commun à un seul secondaire.

La figure 7 donne le schéma d'un capteur inductif linéaire commun à deux secondaire indépendants.

Le système 1 représenté sur la figure 1, est destiné à exploiter les signaux provenant d'un capteur inductif de déplacement 2, du type linéaire, c'est-à-dire fournissant un signal électrique dont l'amplitude est proportionnelle au déplacement.

Ce capteur inductif 2 comporte un primaire 3, associé à deux secondaires identiques 4 et 5. Entre le primaire 3 et les secondaires 4 et 5, est disposé un noyau mobile 6, susceptible d'être rattaché, par une liaison 7, à un objet (non représenté) dont on veut connaître le déplacement ; lesdits secondaires 4 et 5 sont disposés de façon que, en l'absence dudit noyau 6, les tensions qui y sont induites par le primaire 3 soient d'amplitudes égales, et en opposition de phase.

Une source de tension alternative 8 est montée entre les bornes 9 et 10 du primaire 3, de sorte que celui-ci est le siège d'une tension primaire alternative VR.

Les deux secondaires 4 et 5 sont montés en série, de sorte que la tension VX qui apparaît aux bornes 11 et 12 sous l'action de la tension primaire VR et la somme algébrique des tensions induites dans chacun desdits secondaires. Pour une position médiane dudit noyau 6, ces deux tensions induites sont égales et opposées, de sorte que la tension VX est nulle. Par construction, l'amplitude maximale de VX est inférieure à celle de VR.

Le système d'exploitation 1 comporte deux étages d'entrée différentiels 13 et 14. Les bornes 15 et 16 de l'étage différentiel 13 sont destinées à être reliées aux bornes 9 et 10 du primaire 3, tandis que les bornes 17 et 18 de l'étage différentiel 14 sont destinées à être reliées aux bornes 11 et 12 des secondaires 4 et 5, montés en série.

Les sorties 19 et 20 desdits étages d'entrée différentiels 13 et 14 sont reliées à un additionneur 21, dont la sortie 22 est réunie à un redresseur à double alternance 23. De plus, la sortie 19 de l'étage 13 est reliée à un autre redresseur à double alternance 24.

La sortie 25 du redresseur 23 est reliée à l'entrée positive d'un soustracteur 27, dont l'entrée négative est réunie à la sortie du redresseur 24.

La sortie 28 du soustracteur 27 est réunie à un filtre 29, susceptible de fournir à sa sortie 30, la valeur moyenne du signal continu qu'il reçoit à son entrée 28.

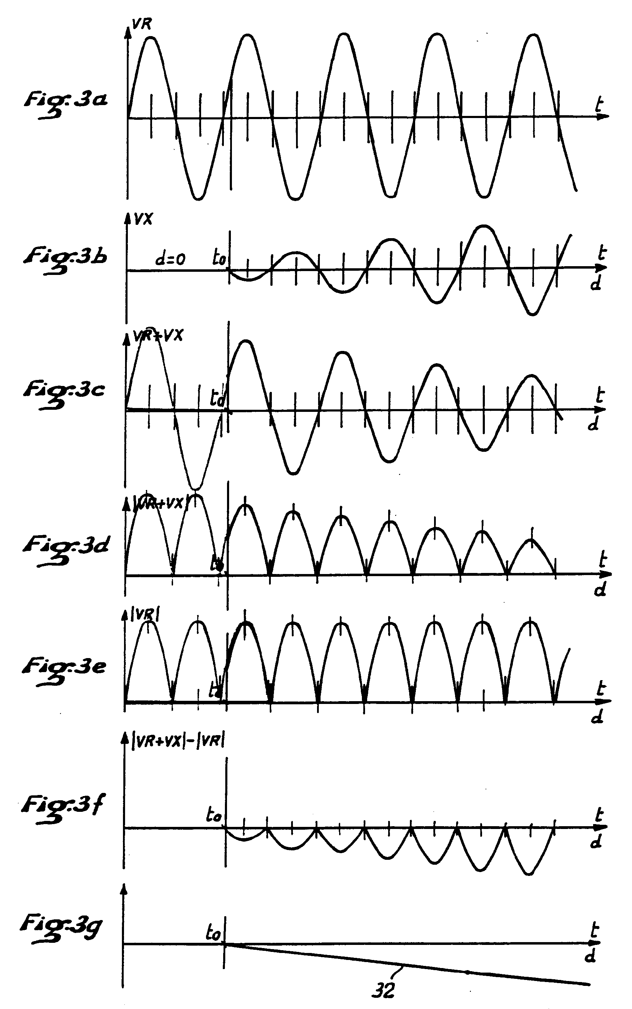

Le fonctionnement du système de la figure 1 est expliqué ci-après, en regard des figures 2a à 2g et 3a à 3g.

La source alternative 8 engendre la tension primaire VR dans le primaire 3 (voir la figure 2a). Tant que le noyau 6 est dans sa position médiane, les tensions induites dans les secondaires 4 et 5 sont d'amplitudes égales, mais de phases opposées, de sorte que le signal VX est nul (voir la zone I de la figure 2b). Par suite, le signal à la sortie 20 de l'étage d'entrée 14 est également nul. Il en résulte que le signal à la sortie 22 de l'additionneur est constitué de la seule tension VR. Le soustracteur 27 fait donc la soustraction de deux tensions redressées identiques, à savoir la tension redressée VR, notée |VR|. Le signal apparaissant à la sortie 30 est donc nul.

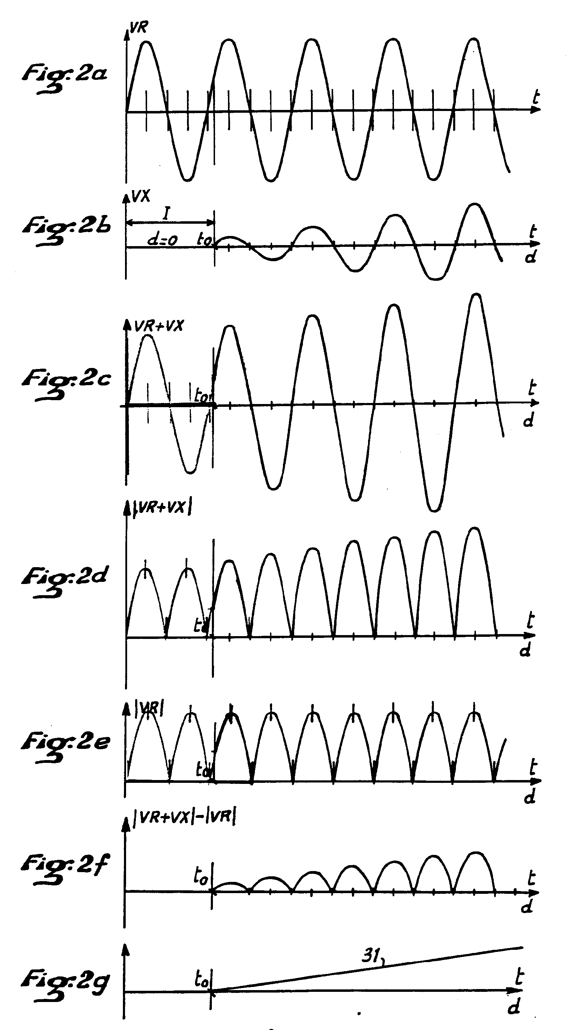

Si maintenant, à l'instant t=to (voir la figure 2b), on déplace (voir la flèche F1) le noyau magnétique 6 pour le rapprocher du secondaire 4 (supposé être en phase avec le primaire 3) et l'éloigner du secondaire 5 (supposé être en opposition de phase avec le primaire 3), on renforce progressivement le couplage magnétique entre le primaire 3 et le secondaire 4, et on amoindrit progressivement le couplage magnétique entre le primaire 3 et le secondaire 5. Par suite, au fur et à mesure que le déplacement $\underline{d}$ augmente dans le sens de la flèche F1, à partir de la position médiane du noyau 6, entre les bornes 11 et 12 apparaît une tension VX en phase avec la tension VR, mais dont l'amplitude augmente progressivement (voir la figure 2b). Il en résulte donc également que la somme VR+VX apparaissant sur la sortie 22 de l'additionneur 21, est en phase avec VR et présente une amplitude croissante avec $\underline{d}$ (voir la figure 2c).

A la sortie 25 du redresseur 23 à double alternance, apparaît donc la tension redressée VR+VX, notée |VR+VX| et illustrée sur la figure 2d. Cette tension |VR+VX| est donc constituée d'une suite d'alternances positives, d'amplitude croissante.

Dans le soustracteur 27, on soustrait la tension redressée VR, montrée par la figure 2e et notée |VR|, de la tension |VR+VX|. On obtient donc à la sortie 28 dudit soustracteur 27 la tension continue |VR+VX|-|VR| montrée par la figure 2f et constituée d'une suite d'alternances positives, d'amplitude progressivement croissante (voir la figure 2f).

Le filtre 29 fournit donc à sa sortie 30 le signal 31 continu, positif et croissant, montré par la figure 2g et formé par la valeur moyenne du signal |VR+VX| - |VR| de la figure 2f.

On voit donc que le déplacement du noyau magnétique 6 dans le sens de la flèche F1 se traduit par l'apparition d'un signal 31 positif, continu et croissant, sur la borne 30. L'amplitude de ce signal 31 est représentative de l'amplitude du déplacement $\underline{d}$ dans le sens de la flèche F1.

Inversement, si à l'instant t=to (voir la figure 3b), on déplace (voir la flèche F2 de la figure 1) le noyau magnétique 6 pour l'éloigner du secondaire 4 (en phase avec le primaire 3) et le rapprocher du secondiare 5 (en opposition de phase avec le primaire 3), on renforce progressivement le couplage magnétique entre le primaire 3 et le secondaire 5, et on amoindrit progressivement le couplage magnétique entre ledit primaire 3 et le secondaire 4. Par suite, au fur et à mesure que le déplacement $\underline{d}$ augmente dans le sens de la flèche F2 à partir de la portion médiane du noyau 6, entre les bornes 11 et 12 apparaît une tension VX en opposition de phase avec la tension VR, mais dont l'amplitude augmente progressivement (voir la figure 3b). Puisque l'amplitude de VR (figure 3a) est choisie de façon à être supérieure à l'amplitude maximale que peut prendre VX, la somme VR+VX des deux tensions VR et VX en opposition de phase est en phase avec VR, mais présente une amplitude décroissante avec $\underline{d}$ (voir la figure 3C). Un tel signal VR+VX apparaît à la sortie 22 de l'additionneur 21.

Les tensions redressées |VR+VX| et |VR| apparaissant respectivement aux sorties 25 et 26 des redresseurs 23 et 24 sont montrées par les figures 3d et 3e, respectivement ; la tension |VR+VX| est constituée d'une suite d'alternances positives, mais d'amplitude décroissante, alors que, évidemment, la tension |VR| est constituée d'une suite d'alternances positives, d'amplitude constante. Par ailleurs, l'amplitude des alternances de |VR| est plus grande que celles des alternances de |VR+VX|.

Par suite, à la sortie 28 du soustracteur 27, la tension continue |VR+VX|-|VR|, montrée par la figure 3f, est constituée d'une suite d'alternances négatives, d'amplitude de plus en plus grande. Le filtre 29 fournit donc à sa sortie 30, le signal 32 continu, négatif et décroissant, montré par la figure 3g et formé par la valeur moyenne du signal |VR+VX|-|VR| de la figure 3f.

On voit donc que le déplacement du noyau magnétique 6 dans le sens de la flèche F2 se traduit par l'apparition sur la borne 30, d'un signal 32 négatif, continu et décroissant, dont l'amplitude est représentative du déplacement $\underline{d}$ dans le sens de la flèche F2.

Ainsi, à la sortie 30 du filtre 29, apparaît un signal (31 ou 32) dont l'amplitude est représentative de l'ampleur du déplacement $\underline{d}$ et dont le signe est représentatif du sens (F1 ou F2) dudit déplacement.

Sur la figure 4, on a représenté une variante de réalisation 40 du système de la figure 1. Dans cette variante de réalisation, on retrouve les éléments 13, 15-19 et 23-30 décrits en regard de la figure 1. Comme on peut le voir, l'étage d'entrée différentiel 14 et l'additionneur 21 ont été remplacés par un étage d'entrée différentiel double 41, recevant, à la fois, la tension VX depuis les bornes 17 et 18 et la tension VR depuis les bornes 15 et 16. Par suite, la liaison 33 entre la sortie 19 de l'étage différentiel 13 et l'additionneur 21 a été supprimée, et remplacée par une liaison 42 entre les bornes 15 et 16 et l'étage d'entrée double 41. A la sortie 43 de ce dernier apparaît directement la somme VR+VX. Cette sortie 43 est reliée au redresseur 23 à double alternance, à la place de la sortie 22 de l'additionneur 21.

Bien entendu, le fonctionnement du système 40 est semblable à celui du système 1, décrit à l'aide des figures 2a à 2g et 3a à 3g.

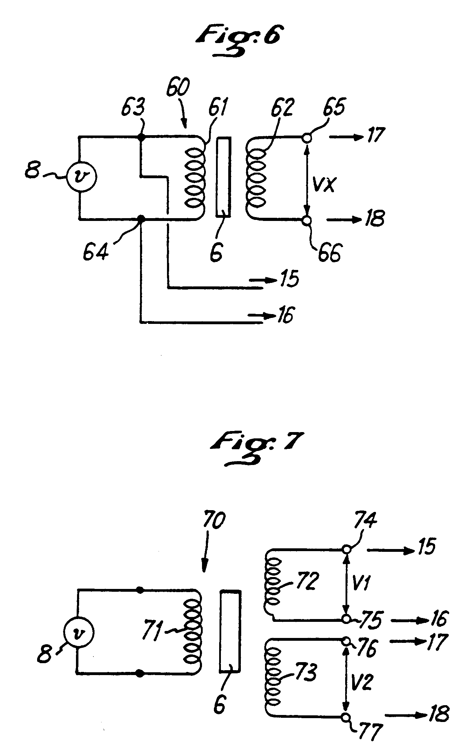

La variante de réalisation 50 montrée par la figure 5 est conforme à la présente invention. On retrouve les éléments 13, 15-19, 23-30 et 41-43 du système de la figure 4. De plus, ce système 50 comporte :
- un interrupteur 51, interposé dans la liaison 26 entre le redresseur 24 et le soustracteur 27 ;
- une branche de circuit 52-55, reliant la sortie 25 du redresseur 23 à une borne supplémentaire 55 et comportant en série un interrupteur 52, un additionneur 53 et un filtre de moyennage 54 ;
- une liaison 56 entre la sortie 26 du redresseur et l'additionneur 53 ; et
- un système interrupteur 57 susceptible d'ouvrir la liaison 42.

On voit aisément que, lorsque l'interrupteur 51 est fermé, alors que les interrupteurs 52 et 57 sont fermés, le système 50 de la figure 5 est identique à celui de la figure 4 et fonctionne donc de façon semblable. Dans cette configuration, le système 50 est donc apte à exploiter les signaux d'un capteur inductif à deux secondaires en série, tel qu'illustré sur la figure 1. On remarquera que, dans ce cas, apparaît un signal continu représentatif de la tension redressée |VR| sur la borne 55, grâce à la liaison 56 et à l'action du filtre 54 (semblable au filtre 29). On peut donc disposer un diviseur (non représenté) entre les bornes 30 et 55 afin de former le rapport des signaux respectivement représentatifs de |VX| et de |VR|, de façon à s'affranchir de l'effet d'éventuelles variations de la tension engendrée par la source 8.

Sur la figure 6, on a représenté un autre type 60 de capteur inductif connu, comportant un primaire 61 et un seul secondaire 62. Le primaire 61 est alimenté entre ses bornes 63 et 64 par la source alternative 8, de sorte qu'une tension alternative VX, représentative du déplacement du noyau 6 disposé entre lesdits primaire et secondaire, apparaît aux bornes 65 et 66 dudit secondaire 62. Les bornes 63 à 66 du capteur sont respectivement reliées aux bornes 15 à 18 du système 50. Dans ce dernier, les interrupteurs 51 et 52 sont maintenus ouverts, tandis que l'interrupteur 57 est ouvert. Par suite, sur la borne 30 apparaît un signal continu représentatif du déplacement, tandis que sur la borne 55 apparaît un signal continu représentatif de la tension VR entre les bornes 63 et 64 du primaire 61. Le système 50 permet donc de connaître ledit déplacement et éventuellement d'effectuer le rapport des signaux apparaissant aux bornes 30 et 55, comme mentionné ci-dessus. Eventuellement, les bornes 63 et 64 pourraient être reliées aux bornes 17 et 18, et les bornes 65 et 66 aux bornes 15 et 16. De plus, la liaison entre les bornes 63 et 64 et les bornes 15,16 ou 17,18 n'est pas indispensable, de sorte qu'il est possible de connecter simultanément deux capteurs 60 au système 50. Dans ce cas, à chacune des bornes 30 et 55 apparaît un signal continu représentatif du déplacement d'un noyau 6 d'un capteur 60.

Le capteur inductif 70, de type connu et montré sur la figure 7, comporte un primaire 71 et deux secondaires 72 et 73, indépendants. Le primaire 71 est alimenté entre ses bornes par la source alternative 8, de sorte que des tensions alternatives V1 et V2, représentatives du déplacement du noyau 6 disposé entre lesdits primaire et secondaire, apparaissent respectivement aux bornes 74 et 75 du secondaire 72 et aux bornes 76 et 77 du secondaire 73. Les bornes 74 à 77 sont respectivement reliées aux bornes 15 à 18 du système 50. Dans ce dernier, les interrupteurs 51 et 52 sont maintenus fermés et l'interrupteur 57 est maintenu ouvert.

Par suite, sur la borne 30, apparaît un signal continu représentatif de la différence $|V1|-|V2|$ entre les tensions redressées $|V1|$ et $|V2|$, tandis que, sur la borne 55, apparaît le signal continu représentatif de la somme $|V1|+|V2|$ desdites tensions redressées. Il est aisé de constater que le rapport de ces deux signaux continus somme et différence est représentatif du déplacement $\underline{d}$ du noyau 6. Par suite, un diviseur (non représenté) disposé entre les bornes 30 et 55 permet également de connaître ledit déplacement $\underline{d}$.

## Revendications

1. Système pour l'exploitation des signaux engendrés par un capteur inductif linéaire de déplacement (2) pourvu d'un primaire (3), aux bornes (9,10) duquel est montée une source de tension alternative (8), et d'un seul ou de deux secondaires (4,5) identiques indépendants, comportant :
    – des premiers moyens d'entrée (15, 16) pour une première tension alternative ;
    – des seconds moyens d'entrée (17, 18) pour une seconde tension alternative ;
    – des premiers moyens d'addition (21, 41) pour former la somme desdites première et seconde tensions alternatives ;
    – des premiers moyens (23) pour le redressement à double alternance de ladite somme ;
    – des seconds moyens (24) pour le redressement à double alternance de ladite première tension alternative ; et
    – des moyens de soustraction (27) pour former la différence entre ladite somme redressée et ladite première tension redressée ;
    caractérisé en ce qu'il comporte de plus :
    – des premiers moyens d'intégration (29) pour donner la valeur continue moyenne de ladite différence,
    – un premier interrupteur (51) disposé entre lesdits seconds moyens de redressement (24) et lesdits moyens de soustraction (27) :
    – une branche de circuit(52, 53, 54) reliée à la sortie desdits premiers moyens de redressement (23) et comportant en série un second interrupteur (52), des seconds moyens d'addition (53) et des seconds moyens d'intégration (54) pour donner une valeur continue moyenne ;
    – une liaison (56) entre la sortie desdits seconds moyens de redressement (24) et lesdits seconds moyens d'addition (53) ; et
    – un troisième interrupteur (57) commandant l'amenée de ladite première tension alternative auxdits premiers moyens d'addition (21,41).

2. Système selon la revendication 1, caractérisé en ce qu'il comporte des moyens (13,14) d'entrée flottante respectivement reliés auxdits premiers et seconds moyens d'entrée (15, 16 ; 17, 18).

3. Système selon la revendication 2, caractérisé en ce que l'un (41) desdits moyens d'entrée flottante est apte, de plus, à former la somme desdites première et seconde tensions alternatives.

## Patentansprüche

1. System zur Auswertung von Signalen eines linearen induktiven Weggebers (2) mit einer Primärwicklung (3), an deren Klemmen (9, 10) eine Wechselspannungsquelle (8) angeschlossen ist, und mit einer einzigen oder zwei identischen, selbständigen Sekundärwicklungen (4, 5), bestehend aus:
    – ersten Eingangsmitteln (15, 16) für eine erste Wechselspannung;
    – zweiten Eingangsmitteln (17, 18) für eine zweite Wechselspannung;
    – ersten Addiermitteln (21, 41) zur Bildung der Summe der genannten ersten und zweiten Wechselspannung;
    – ersten Mitteln (23) für die Zweiweggleichrichtung der genannten Summe;
    – zweiten Mitteln (24) für die Zweiweggleichrichtung der genannten ersten Wechselspannung; und

– Subtrahiermitteln (27) zur Bildung der Differenz zwischen der genannten gleichgerichteten Summe und der genannten ersten gleichgerichteten Spannung,

dadurch gekennzeichnet, daß es ferner

– erste Integriermittel (29) zur Bildung des mittleren stetigen Wertes der genannten Differenz;

– einen ersten Schalter (51), welcher zwischen den genannten zweiten Gleichrichtmitteln (24) und den genannten Subtrahiermitteln (27) angeordnet ist;

– einen Schaltungszweig (52, 53, 54), welcher an den Ausgang der genannten ersten Gleichrichtmittel (23) angeschlossen ist und in Reihe einen zweiten Schalter (52), zweite Addiermittel (53) und zweite Integriermittel (54) zur Bildung eines mittleren stetigen Wertes umfaßt;

– eine Verbindung (56) zwischen dem Ausgang der genannten zweiten Gleichrichtmittel (24) und den genannten zweiten Addiermitteln (53); und

– einen dritten Schalter (57), welcher die Zuführung der genannten ersten Wechselspannung zu den genannten ersten Addiermitteln (21, 41) steuert, umfaßt.

2. System gemäß Anspruch 1, dadurch gekennzeichnet, daß es Mittel (13, 14) für den erdfreien Eingang umfaßt, welche mit den genannten ersten beziehungsweise zweiten Eingangsmitteln (15, 16; 17, 18) verbunden sind.

3. System gemäß Anspruch 2, dadurch gekennzeichnet, daß das eine (41) der genannten Mittel für den erdfreien Eingang ferner die Summe der genannten ersten und zweiten Wechselspannung bilden kann.

characterised in that it further includes :

– first integration means (29) in order to give the mean continuous value of said difference ;

– a first switch (51) disposed between said second rectification means (24) and said subtraction means (27) ;

– a circuit arm (52, 53, 54) connected to the output of said first rectification means (23) and comprising in series a second switch (52), second addition means (53) and second integration means (54) so as to give a mean continuous value ; - a link (56) between the output of said second rectification means (24) and said second addition means (53) ; and

– a third switch (57) controlling the supplying of said first alternating voltage to said first addition means (21, 41).

2. System according to claim 1, characterized in that it comprises floating input means (13, 14) respectively connected to said first and second input means (15, 16 ; 17, 18).

3. System according to claim 2, characterized in that one (41) of said floating input means is moreover used to form the sum of said first and second alternating voltages.

## Claims

1. System for the exploitation of signals generated by a linear inductive displacement sensor (2) provided with a primary (3), at the terminals (9,10) of which is mounted a source of alternating voltage (8), and with one or two identical independent secondaries (4,5), comprising :

– first input means (15,16) for a first alternating voltage ;

– second input means (17,18) for a second alternating voltage ;

– first addition means (21,41) in order to form the sum of said first and second alternating voltages ;

– first means (23) for the double-alternation rectification of said sum ;

– second means (24) for the double-alternation rectification of said first alternating voltage ; and

– subtraction means (27) in order to form the difference between said rectified sum and said first rectified voltage ;

*Fig. 1*

$|VR+VX|$

$|VR|$

$VR+VX$

$VX$

$VR$

7

EP 0 348 259 B1

Fig.2a

Fig.2b

Fig.2c

Fig.2d

Fig.2e

Fig.2f

Fig.2g

8

Fig.3a

VR

t

Fig.3b

VX

d=0    t₀

t
d

Fig.3c

VR+VX

t₀

t
d

Fig.3d

|VR+VX|

t₀

t
d

Fig.3e

|VR|

t₀

t
d

Fig.3f

|VR+VX|-|VR|

t₀

t
d

Fig.3g

t₀

t
d

32

9

## Fig:4

## Fig:5

## Fig. 6

## Fig. 7